# DEMANDE DE BREVET EUROPEEN

(11) **EP 0 617 136 A1**
(43) Date de publication de la demande: **28.09.1994**
(21) Numéro de dépôt: 94470004.6
(22) Date de dépôt: 04.03.1994
(51) Int. Cl.: C22B 5/14, C21B 13/00

(54) **Installation de réduction du minerai de fer utilisant un lit fluidisé circulant munie d'un dispositif de réglage du débit de matières solides**

(30) Priorité: 26.03.1993 FR 9303710
(71) Demandeur: SOLLAC S.A., F-92800 PUTEAUX (FR); UNIMETAL Société Française des Aciers Longs, F-57120 Rombas (FR)
(72) Inventeur: Delebarre, Arnaud, F-57000 Metz (FR)
(74) Mandataire: Ventavoli, Roger

(57) **Abrégé**

L'invention concerne une installation de réduction du minerai de fer, du type comprenant :
- un premier réacteur (1) contenant un lit de minerai de fer en cours de réduction, pourvu de moyens pour fluidiser et mettre en circulation ledit minerai, et comportant un dispositif (5) d'injection d'un gaz réducteur contenant du CO et de l'hydrogène à la base dudit premier réacteur (1) ;
- un cyclone (6) assurant la séparation entre les gaz réducteurs contenant du CO et de l'hydrogène issus dudit premier réacteur (1) et les matières solides qu'ils contiennent, et l'évacuation desdits gaz réducteurs ;
- un réacteur de gazéification (11) recueillant lesdites particules, pourvu de moyens de production de CO et d'hydrogène à partir de matières carbonées et d'oxygène, et d'une conduite (21) de renvoi dudit CO, dudit hydrogène et desdites matières solides dans ledit premier réacteur (1) ;
- des moyens (12, 13) de mélange de minerai neuf auxdites matières solides entre ledit cyclone (6) et ledit réacteur de gazéification (11) ;
- des moyens (22, 23) d'extraction du minerai en cours de réduction à partir dudit premier réacteur (1) ;
- une conduite (10) reliant ledit cyclone (6) audit réacteur de gazéification (11) ;

caractérisée en ce que l'une au moins desdites conduites (10, 21), est équipée de moyens de contrôle du débit de minerai de fer et de matières carbonées.

## Description

L'invention concerne le domaine de la réduction du minerai de fer dans des installations fonctionnant avec un lit fluidisé circulant de minerai.

Actuellement, des recherches sont activement conduites afin de mettre au point des procédés sidérurgiques qui pourraient se substituer au haut fourneau. Les inconvénients du haut fourneau que de tels procédés visent à éliminer seraient son manque de souplesse de fonctionnement, et la nécessité de lui associer une cokerie et une installation d'agglomération du minerai de fer. Par ailleurs, il faudrait que les nouveaux procédés conservent les excellentes performances énergétiques du haut fourneau.

Ces nouveaux procédés sont souvent désignés par le terme: procédés de "fusion réduction" ou "smelting reduction". Une famille de ces procédés associe deux réacteurs. L'un de ces réacteurs produit à partir de minerai de fer du minerai très fortement réduit à l'état métallique, qui est enfourné dans le deuxième réacteur pour être transformé en fonte liquide. Les circuits gazeux de ces deux réacteurs peuvent être liés l'un à l'autre, ou être totalement indépendants.

Des formes de réalisation particulières d'un tel procédé sont décrites par exemple dans l'article "Reduction of fine ore in the circulating fluid bed as the initial stage in smelting reduction" (Metallurgical Plant and Technology International, Mars 1991, pp. 28-32), et dans la Demande de Brevet FR 91 14467. La réaction de réduction du minerai de fer s'effectue en faisant réagir un lit fluidisé circulant, formé par des particules de minerai en cours de réduction et de charbon transformé en semi-coke, avec un gaz réducteur (mélange CO/CO₂/H₂/H₂O) qui assure également la fluidisation. Celle-ci a lieu dans une première partie du réacteur, dite "réacteur de préréduction". Les gaz chargés en particules de minerai en cours de réduction et de semi-coke passent ensuite dans un cyclone. Les gaz s'échappent alors du réacteur, tandis que les particules descendent dans un gazéifieur, où sont introduits du charbon en excès et de l'oxygène dans le but de former du CO et de l'hydrogène qui vont contribuer à la réduction du minerai. L'excès de charbon est transformé en semi-coke. Les matières solides et les gaz reviennent ensuite dans le réacteur de préréduction. Du minerai neuf est introduit dans le courant de matières, de préférence entre le cyclone et le gazéifieur. Les gaz qui se sont échappé du cyclone sont épurés et réintroduits à la base du réacteur de préréduction et aussi éventuellement à la base du gazéifieur, où ils peuvent rejouer leur rôle de milieu fluidisant et réactionnel.

Des variantes peuvent être apportées au schéma qui vient d'être décrit. On peut, par exemple, placer le réacteur de préréduction avant le gazéifieur, ou placer le gazéifieur en dehors du circuit des matières solides et installer à sa place une simple zone de fluidisation de ces matières (voir la Demande de Brevet FR 91 14468).

Dans ces installations, la communication entre le gazéifieur et le réacteur de préréduction peut s'effectuer par un siphon qui constitue une zone à forte densité de matières solides. Il assure le transfert des solides en amortissant les fluctuations de pression des deux réacteurs.

Un inconvénient de ces installations est qu'elles ne permettent pas de contrôler le débit des produits solides entraînés par le gaz de fluidisation du réacteur de préréduction de manière indépendante du débit de ces gaz. Ce débit de solides est en effet une fonction directe du débit des gaz de fluidisation. Dans le cas où on traite un minerai dont la vitesse de réduction est relativement faible, on ne peut donc augmenter son temps de séjour sans augmenter la quantité de gaz circulant dans l'installation, d'où une perte de productivité de celle-ci. On modifie ainsi le déroulement des processus chimiques et thermiques à l'intérieur de l'installation. Inversement, comme l'essentiel des transferts thermiques est dû aux matières solides, on peut vouloir régler les températures dans les diverses parties de l'installation en agissant sur le débit de solides qui y circulent. Mais ceci n'est alors pas possible sans une modification de la quantité totale de matières solides (appelée "inventaire") présentes dans la totalité de l'installation.

Le but de l'invention est d'augmenter la souplesse du fonctionnement des installations de réduction du minerai de fer précédemment décrites en assurant un contrôle du débit de matières solides indépendant de celui du débit de gaz de fluidisation.

A cet effet, l'invention a pour objet une installation de réduction du minerai de fer, du type comprenant:
- un premier réacteur contenant un lit de minerai de fer en cours de réduction, pourvu de moyens pour fluidiser et mettre en circulation ledit minerai, et comportant un dispositif d'injection d'un gaz réducteur contenant du CO et de l'hydrogène à la base dudit premier réacteur;
- un cyclone assurant la séparation entre les gaz réducteurs contenant du CO et de l'hydrogène issus dudit premier réacteur et les matières solides qu'ils contiennent, et l'évacuation desdits gaz réducteurs ;
- un réacteur de gazéification recueillant lesdites particules, pourvu de moyens de production de CO et d'hydrogène à partir de matières carbonées et d'oxygène, et d'une conduite de renvoi dudit CO, dudit hydrogène et desdites matières solides dans ledit premier réacteur;
- des moyens de mélange de minerai neuf auxdites matières solides entre ledit cyclone et ledit réacteur de gazéification;
- des moyens d'extraction du minerai en cours de réduction à partir dudit premier réacteur;
- une conduite reliant ledit cyclone audit réacteur de gazéification,

caractérisée en ce que l'une au moins desdites conduites, est équipée de moyens de contrôle du débit de minerai de fer et de matières carbonées.

Comme on l'aura compris, l'invention consiste à installer, dans le circuit des matières, une vanne assurant la régulation du débit de solides en circulation, par exemple entre le gazéifieur et le réacteur de préréduction.

L'invention sera mieux comprise à la lumière de la description qui suit, faisant référence aux figures annexées suivantes:
- la figure 1 qui schématise une installation de réduction du minerai de fer comprenant un dispositif de régulation du débit de solides en circulation selon l'invention;
- la figure 2 qui schématise une variante de l'installation précédente, dans laquelle un réacteur contenant une réserve de matières solides est intercalé sur le circuit des matières;
- la figure 3 qui schématise une variante de la configuration précédente.

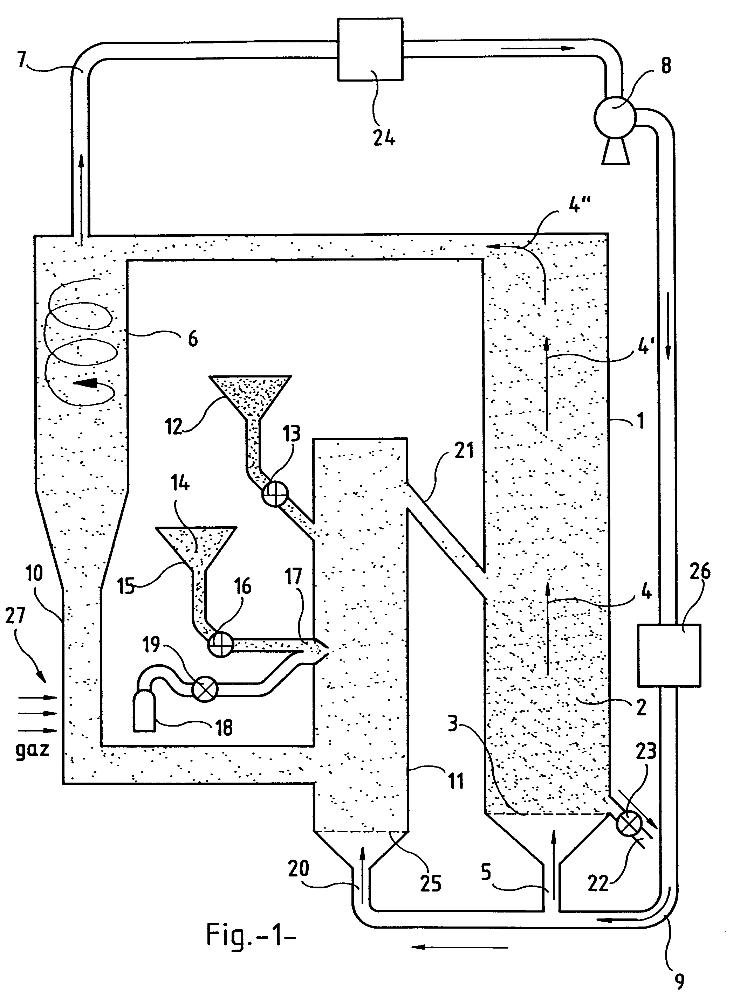

La figure 1 montre une installation de réduction du minerai de fer composée essentiellement de trois parties. Un premier réacteur 1 contient à sa base un lit 2 de matières solides relativement dense, contenant essentiellement du minerai de fer se trouvant pour sa plus grande partie à l'état réduit, mélangé à du semi-coke. Ce lit 2 repose sur un support 3 perméable aux gaz. Le lit 2 est traversé par un courant gazeux de fluidisation qui le met en circulation à travers l'installation, comme indiqué par les flèches 4, 4', 4". Ce gaz de fluidisation est un gaz réducteur, à savoir un mélange CO/CO₂/H₂/H₂O qui est injecté à la base du réacteur 1 par une conduit 5. Il se déplace à une vitesse de l'ordre de 2 à 10 m/s. Au cours de leur cheminement dans le réacteur 1, les particules de minerai de fer initialement à l'état naturel oxydé subissent une réduction en fer métallique par le CO et l'hydrogène des gaz de fluidisation. Les gaz et les matières solides pénètrent ensuite dans un cyclone 6, dans lequel ils sont séparés les uns des autres. Les gaz sont évacués du cyclone par une conduite 7, alors que les matières solides retombent dans la partie inférieure du cyclone 6. Les gaz sont épurés du CO₂ et de la vapeur d'eau qu'ils contiennent dans un réacteur approprié 24 d'un type connu en soi, sont renvoyés par des moyens adaptés symbolisés par la pompe 8 et la conduite 9 vers la base du réacteur 1, après être passés par un préchauffeur 26, et sont à nouveau utilisés pour la fluidisation et la réduction du minerai. Les matières solides sortant du cyclone 6 sont amenées par une conduite 10 vers un réacteur de gazéification 11.

Le réacteur de gazéification 11 a pour fonctions de générer le gaz servant à la fluidisation et à la circulation des matières, et de fournir l'énergie nécessaire à l'équilibre du bilan thermique. A cet effet, on peut y réaliser des injections séparées d'oxygène et de matières carbonées, telles que du charbon, ces matières carbonées étant en excès. On forme ainsi du CO et de l'hydrogène (avec une certaine proportion de CO₂ et de vapeur d'eau) qui, dans le reste de l'installation vont réagir avec le minerai pour le réduire en fer et s'oxyder eux-mêmes en CO₂ et H₂O, alors que le charbon en excès se transforme en semi-coke. La température des gaz est de l'ordre de 950°C, et la proportion de CO qu'ils contiennent est d'environ 30 %. On peut également, comme représenté sur la figure 1, introduire par une vanne 16 dans un brûleur 17, les matières carbonées 14, contenues dans une trémie 15. Ce brûleur 17 est alimenté également par de l'oxygène contenu dans un récipient 18 muni d'une vanne 19. Dans ce brûleur 17 a lieu la combustion en CO des matières carbonées 14 et la formation d'hydrogène, puis le CO et l'hydrogène ainsi formés sont introduits dans le réacteur de gazéification 11. C'est également dans le réacteur de gazéification 11 qu'a lieu, du moins dans l'exemple représenté, l'introduction de minerai neuf dans l'installation, commandée par une vanne 13, à partir d'une trémie 12. Avantageusement, une partie du mélange CO/CO₂/H₂/H₂O servant à la réduction et à la fluidisation est également introduite à la base du réacteur de gazéification 11 par une conduite 20 connectée à la conduite 9 qui amène ces mêmes gaz au premier réacteur. On assure ainsi la fluidisation des particules solides dans le réacteur de gazéification. Le réacteur de gazéification 11 est également muni dans sa partie inférieure d'une grille 25 perméable aux gaz évitant une retombée excessive de matières solides dans la conduite 20. Une conduite 21 assure la communication entre le réacteur de gazéification 11 et le premier réacteur 1. On obtient ainsi un courant continu de matières solides circulantes (minerai, fer et semi-coke) à travers les trois grandes parties de l'installation. Dans la zone basse du premier réacteur 1, a lieu l'extraction périodique ou continue des matières solides par une conduite d'évacuation 22 munie d'une vanne 23. Ces matières, composées de minerai de fer réduit à 75 % au moins et de semi-coke, sont alors prêtes à être introduites dans un réacteur de fusion, où sera produite la fonte.

Selon l'invention, la conduite 10 faisant communiquer le cyclone 6 et le réacteur de gazéification 11 est équipée d'un dispositif jouant le rôle d'une vanne permettant le réglage du débit des solides circulant dans le siphon, et donc dans l'ensemble de l'installation. Cette vanne peut être un dispositif purement mécanique. Cependant, les températures élevées (plusieurs centaines de °C) auxquelles se trouvent les matières en circulation rendraient problématique la tenue dans le temps d'un tel dispositif. C'est pourquoi, comme représenté sur la figure 1, on préfère utiliser une vanne pneumatique. A cet effet, la conduite 10 a, sur au moins une partie de son parcours, la forme d'une jambe en L dans laquelle, de manière connue, on régule le débit des matières solides qui y transitent à l'aide d'un dispositif d'injection de gaz réglable. A cet effet, on injecte, de manière connue en elle-même, en travers de la bande verticale de la jambe en L, par des moyens adaptés 27, une quantité variable de gaz de manière à assurer le débit de solides voulu.

En variante, la jambe en L peut être disposée entre le réacteur de gazéification 11 et le premier réacteur 1.

Il est ainsi possible, sans modifier le débit de gaz réducteurs qui y circulent, de régler le débit des matières solides de manière indépendante du débit des gaz réducteurs. On peut ainsi régler de manière optimale le temps de séjour des matières solides dans l'installation et la stoechiométrie gaz/solides, qui sont directement liés au taux de réduction des matières ferreuses que l'on extrait de l'installation. On peut ainsi obtenir, au choix, une production importante de matières ferrifères à un relativement faible taux de réduction, ou une production moins importante de matières ferrifères fortement réduites, et ce plus aisément que par les installations classiques. On dispose également de davantage de possibilités pour régler de manière séparée les temps de séjour dans le premier réacteur 1 des différentes espèces de matières solides (ferrifères, et carbonées) en fonction de leurs caractéristiques physiques puisqu'on peut y régler plus finement le rapport gaz/solides.

Pour mettre en oeuvre l'invention, il faut disposer de matières solides disponibles pour être injectées, en cas de besoin, dans l'installation. On peut, à cet effet, utiliser la trémie 12 isolée de l'installation et connecter à la conduite reliant la partie inférieure du cyclone et le gazéifieur. Toutefois, on obtient une meilleure efficacité en insérant sur le circuit des matières solides et gazeuses lui-même une réserve interne de matières solides susceptibles d'être mises en circulation à la demande de l'opérateur.

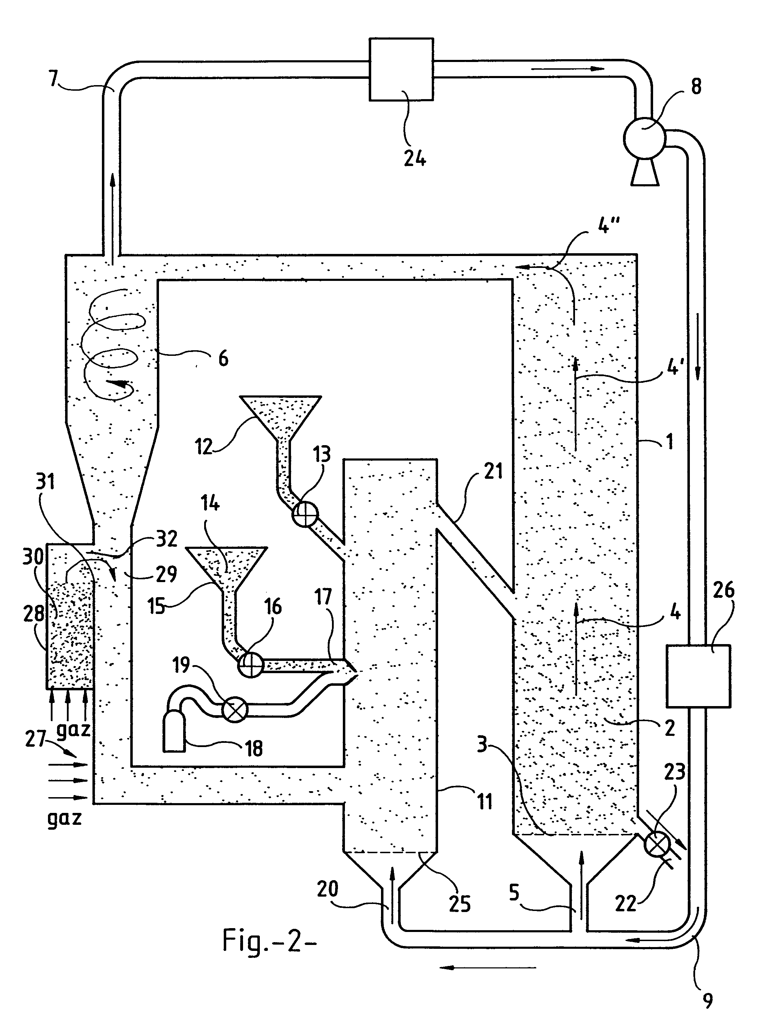

La figure 2 montre un exemple d'installation de minerai de fer voisine de celle de la figure 1 et modifiée comme on vient de l'indiquer. A cet effet, entre le cyclone 6 et la conduite 10 en forme de jambe en L munie d'une vanne pneumatique 27, on insère un réacteur supplémentaire 28 divisé en 2 parties. La première partie 29 est un simple prolongement de la sortie du cyclone 6 aboutissant à la conduite 10 : les matières solides en provenance du cyclone 6 y transitent par simple gravité. Sa deuxième partie 30 est séparée de la première partie 29 par une cloison 31 ménageant un seuil de débordement 32 à sa partie supérieure. Cette deuxième partie 30 renferme une réserve de matières solides ferrifères et carbonées, susceptibles d'être à tout moment, selon la volonté de l'opérateur, mises dans le circuit des matières solides parcourant l'ensemble de l'installation. A cet effet, ces matières solides forment préférentiellement un lit dense fluidisé grâce à une injection de gaz neutre ou réducteur à la base de la deuxième partie 30 du réacteur 28 par des moyens 38. Ainsi, lorsque l'opérateur veut introduire un supplément de matières solides dans l'installation, il peut le faire en modifiant temporairement les conditions de fluidisation dans ce lit dense. En variante ce réacteur supplémentaire 28 peut être placé entre le gazéifieur 11 et le premier réacteur 1, accolé à la conduite 21.

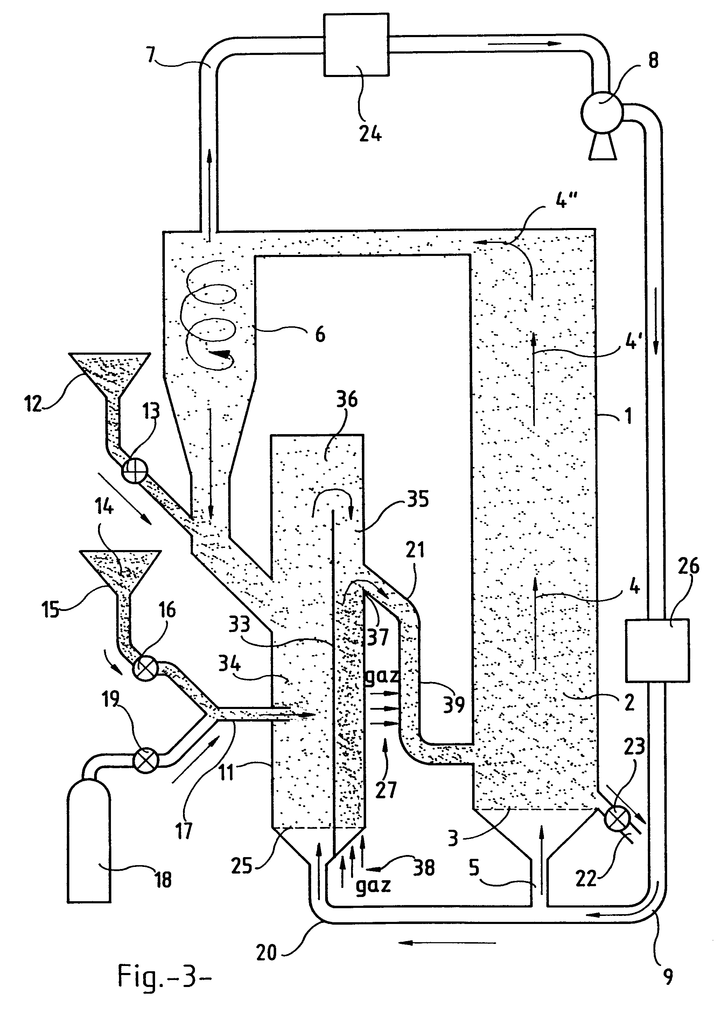

Selon une autre variante, représentée sur la figure 3, on peut modifier la configuration du gazéifieur 11 en y intégrant la réserve de matières solides dont il vient d'être question.

Dans cette variante, la conduite 10 relie directement le cyclone 6 au gazéifieur 11. Celui-ci est divisé en deux compartiments par une cloison 33 : un compartiment amont 34 et un compartiment aval 35. Le compartiment amont 34 remplit les fonctions habituelles du gazéifieur 11 telles que décrites dans les configurations précédentes: il reçoit les matières solides issues du cyclone 6 et des trémies 12 et 15, et aussi les gaz réducteurs à partir du brûleur 17, à moins que ceux-ci ne soient formés dans ce compartiment amont 34 lui-même. Les gaz et les matières solides qu'ils transportent franchissent ensuite le seuil de débordement 36 ménagé à la partie supérieure de la cloison 33 et pénètre dans le compartiment aval 35. La conduite 21 qui les dirige vers le premier réacteur 1 est branchée en un point 37 sur le compartiment aval 35 du gazéifieur 11.

C'est dans la partie inférieure du compartiment aval 3, et en dessous du point 37, que se trouve la réserve de matières solides prêtes à être introduites dans le circuit des matières. Préférentiellement, elles sont sous la forme d'un lit fluidisé dense, fluidisé par par des moyens 38 qui lui sont propres. Lorsque l'opérateur désire transférer des matières solides dans le circuit, il agit sur les moyens de fluidisation 38 de manière à faire déborder les matières dans la conduite 21. Préférentiellement, c'est sur cette conduite 21 que sont implantés les moyens de régulation du débit des matières solides, tels qu'une jambe en L 39 munie d'un dispositif d'injection de gaz 27.

Bien entendu, les différentes configurations représentées ne sont que des exemples de mise en oeuvre de l'invention. On peut, sans sortir de l'esprit de l'invention, en imaginer d'autres variantes qui porteraient en particulier sur la configuration des moyens de contrôle du débit des matières solides, et sur leur emplacement par rapport aux autres organes de l'installation.

## Revendications

**1)** Installation de réduction du minerai de fer, du type comprenant:
- un premier réacteur (1) contenant un lit de minerai de fer en cours de réduction, pourvu de moyens pour fluidiser et mettre en circulation ledit minerai, et comportant un dispositif (5) d'injection d'un gaz réducteur contenant du CO et de l'hydrogène à la base dudit premier réacteur (1) ;
- un cyclone (6) assurant la séparation entre les gaz réducteurs contenant du CO et de l'hydrogène issus dudit premier réacteur (1) et les matières solides qu'ils contiennent, et l'évacuation desdits gaz réducteurs;
- un réacteur de gazéification (11) recueillant lesdites particules, pourvu de moyens de production de CO et d'hydrogène à partir de matières carbonées et d'oxygène, et d'une conduite (21) de renvoi dudit CO, dudit hydrogène et desdites matières solides dans ledit premier réacteur (1) ;
- des moyens (12, 13) de mélange de minerai neuf auxdites matières solides entre ledit cyclone (6) et ledit réacteur de gazéification (11);
- des moyens (22, 23) d'extraction du minerai en cours de réduction à partir dudit premier réacteur (1) ;
- une conduite (10) reliant ledit cyclone (6) audit réacteur de gazéification (11),
caractérisée en ce que l'une au moins desdites conduites (10, 21), est équipée de moyens de contrôle du débit de minerai de fer et de matières carbonées.

**2)** Installation selon la revendication 1, caractérisée en ce que lesdits moyens de contrôle du débit de minerai de fer et de matières carbonées sont constitués par une vanne pneumatique (27).

**3)** Installation selon la revendication 1 ou 2, caractérisée en ce que ladite conduite (10, 21) équipée de moyens de contrôle du débit de minerai de fer et de matières carbonées a la forme d'une jambe en L dans la zone où sont implantés lesdits moyens de contrôle.

**4)** Installation selon l'une des revendications 1 à 3, caractérisée en ce qu'elle comporte un compartiment (28, 35) renfermant une réserve interne de matières solides.

**5)** Installation selon la revendication 4, caractérise en ce que ledit compartiment est pourvu de moyens (38) de fluidisation desdites matières solides.

**6)** Installation selon la revendication 4 ou 5, caractérisée en ce que ledit compartiment (28) est accolé à ladite conduite (10) reliant ledit cyclone (6) audit réacteur de gazéification (11).

**7)** Installation selon la revendication 4 ou 5, caractérisée en ce que ledit compartiment (28) est accolé à ladite conduite (11) de renvoi du CO, de l'hydrogène et des matières solides dans ledit premier réacteur (1).

**8)** Installation selon la revendication 4 ou 5, caractérisée en ce que ledit compartiment (35) est intégré audit gazéifieur (11).
